(19) Europäisches Patentamt
European Patent Office
Office européen des brevets

(11) Publication number: **0 189 854 B1**

# (12) EUROPEAN PATENT SPECIFICATION

(45) Date of publication of patent specification: **16.12.92** (51) Int. Cl.5: **H04Q 7/00**

(21) Application number: **86100904.1**

(22) Date of filing: **23.01.86**

## (54) A communication system and a method of operating it capable of interruption talk during data transmission.

(30) Priority: **25.01.85 JP 10989/85**

(43) Date of publication of application:
**06.08.86 Bulletin 86/32**

(45) Publication of the grant of the patent:
**16.12.92 Bulletin 92/51**

(84) Designated Contracting States:
**DE FR GB SE**

(56) References cited:
**DE-A- 2 257 164**
**US-A- 3 427 590**
**US-A- 4 041 393**
**US-A- 4 199 662**

**PATENT ABSTRACTS OF JAPAN, vol. 4, no. 189 (E-39)[671], 25th December 1980 & JP-A-55 132 158**

**PATENT ABSTRACTS OF JAPAN, vol. 8, no. 107 (E-245)[1544], 19th May 1984 & JP-A-59 23 641**

(73) Proprietor: **NEC CORPORATION**
**7-1, Shiba 5-chome Minato-ku**
**Tokyo 108-01(JP)**

(72) Inventor: **Kasugai, Teruaki c/o NEC Corporation**
**33-1, Shiba 5-chome Minato-ku**
**Tokyo(JP)**

(74) Representative: **Vossius & Partner**
**Siebertstrasse 4 P.O. Box 86 07 67**
**W-8000 München 86(DE)**

**EP 0 189 854 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a communication system and to a method of operating it capable of interruption talk during data transmission, and, more particularly, to a radio communication system and to a method of operating it capable of interruption talk during data transmission by polling between a fixed central station and a plurality of mobile terminal units.

### Description of the Prior Art

A conventional radio communication system of this kind comprises a central station and a plurality of terminal units such as mobile units. The central station sends digital polling signals to the terminal units and receives response data signals from the terminal units, respectively.

During the time when data transmission is performed by polling operation, etc., it has been inhibited to make a free talk from terminal units in order to avoid any data destruction by collision. This has caused inconveniences, such as impossibility of talk even in an emergency or the like.

A further example of a communication system known from the prior art is given in the Patent Abstract of Japan, vol. 4, no. 189 (E-39)[671], 25th December 1980.

### SUMMARY OF THE INVENTION

The purpose of the present invention is, therefore, to provide a new communication system and a new method of operating it that is capable of realizing an interruption talk even during polling operation.

As described above, the present invention provides a communication system comprising a central station, and a plurality of terminal units linked thereto,

(1) said central station comprising:
means for generating a sequence of digital signals comprising a plurality of polling signals and at least one interruption acceptance signal, said interruption signal being inserted into said polling signals at a time interval and being followed by a plurality of empty time slots;
means for sending said digital signals to said terminal units,
(2) said terminal units each comprising:
means for receiving said digital signals;
means for sending to said control station a response signal corresponding to each of said polling signals;
means responsive to a control signal for sending an interruption signal after the reception of said interruption acceptance signal,
(3) said central station further comprising means for sending a polling completion signal in response to the reception of said interruption signal within said empty time slots, to said terminal units,
(4) each of said terminal units further comprising means for receiving said polling completion signal,
whereby the terminal unit sending said interruption signal talks with said central station.

### DESCRIPTION OF THE DRAWINGS

The present invention will hereinafter be explained with reference to the accompanying drawings:

Fig. 1 illustrates a block diagram of a radio communication system including a central station and a plurality of terminal units or stations, to which the present invention is applicable;
Fig. 2 is a block diagram of any of the terminal units and the central station of the present invention;
Fig. 3 illustrates a state transition diagram of the terminal units according to the present invention;
Fig. 4 illustrates a state transition diagram of the central station according to the present invention;
Figs. 5 and 6 show respectively examples of a timing chart of the central station and that of the system; and
Fig. 7 shows an example of a signal format.

In Fig. 1 showing a radio communication system to which the present invention is applicable, the terminal units $1_1$, $1_2$, $1_3$, . . . $1_N$ are linked to the central station 3 by a pair of radio carrier waves 2. The radio carrier waves 2 in this case may be replaced by a single carrier wave. Further, the communication system in this case may be either full or half duplex one. Moreover, the terminal units may be either fixed or mobile ones. The terminal units may be linked to the central station by transmission wires, respectively.

Fig. 2 shows a block diagram of the equipments of the terminal units and of the central station shown, in Fig. 1, in the style common to the terminal units and the central station. The information data generated from an information generator 11 comprising keys, sensors, etc. are processed by a controller 12, converted to baseband signals, for example, FSK signals, PSK signals by a modulator/demodulator 13 and supplied to a data/voice switching section 14. The controller 12 controls the data/voice switching section 14 to control the transmission and reception of the data and/or voice, as described hereinafter. On the other hand, a tranceiver 15 also is connected to the data/voice switching section 14. In the case of half duplex communication system or the like, a transmission start signal may be sent from the tranceiver 15 to the controller 12. The signal selected by the data/voice switching section 14 is converted to radio modulated carrier wave in a radio section 16 and transmitted to a remote unit or station through an antenna 17.

On the other hand, the signal from a remote unit or station is received by the antenna 17, demodulated into the baseband signal by the radio section 16 and supplied to the data/voice switching section 14. The data signals are always demodulated in the modulator/demodulator 13 and sent to the controller 12. The controller 12 then controls the data/voice switching section 14 under the conditions also explained hereinafter so that in the case of voice, connection is made to the tranceiver 15, and in the case of data, decoding is made by the controller 12 to send its outputs to an information output means 18 comprising a display, a printer, etc. In this connection, it is to be noted that although Fig. 2 shows an embodiment employing a subcarrier modulation system, similar result can be obtained by employing a direct modulation system to effect the modulation into the radio carrier waves direct by the data.

Fig. 3 illustrates state transition diagram at the terminal units. First, "power on" operation permits start of a talk mode. In this talk mode, it is so arranged that the transmission of either of voice or data can freely be made. Usually the operation is made in this talk mode and upon receipt of a polling signal from the central station, the state moves to a polling mode. The meaning of the term "polling signal" used herein is not limited only to the polling signal addressed to one specific terminal unit, but covers all of the polling signals carried by the same channel, say in the example of the below mentioned signal format, all the signals having a polling command as their commands.

In the polling mode, it is so arranged that any free transmission of voice and data is inhibited, but only during the polling addressed to one specific terminal unit, its own data can be transmitted. This is to avoid any destruction of data by collision. The release of the polling mode usually is effected in either of two manners, one is the reception of a polling completion signal from the central station and the other is the time over, that is, the absence of the polling signal within a predetermined period of time.

According to the present invention, however, another function, that is, a compulsory release function of the polling mode is specifically provided for any interruption talk. Namely, by pushing an interruption button or by generating a control signal, the state goes to the wait of interruption acceptance signal. It is so arranged that even in this state, usual polling function is maintained. Upon receipt of an interruption acceptance signal from the central station, an interruption signal is transmitted and the state returns to the talk mode.

Fig. 4 illustrates a state transition diagram at the central station. Similarly to the terminal units, "power on" operation permits start of a talk mode and usually the operation proceeds in this mode. In the talk mode, free talking is possible and when the data from terminal units are received, a response signal will be sent back.

The transition to a polling mode is manually started or automatically started by means of a timer, etc. In the polling mode, the polling of the terminal units is carried out sequentially and, during such polling operation, interruption acceptance signals are transmitted to the terminal units at fixed or unfixed time intervals and the state moves to the wait of interruption signals from the terminal units. In the "wait of interruption signals" state, any reception of interruption signals within a predetermined period of time causes transmission of a polling completion signal or the like to return to the talk mode, but if no interruption signals are received within the period, the state returns to the polling mode and the polling continues. Upon completion of the polling of the necessary number of the terminal units, the state returns to the talk mode. At such time, a polling completion signal may either be generated or not.

Fig. 5 shows an example of a timing chart of the central station. As soon as the polling is started, the terminal units are sequentially polled. In this example, five terminal units are polled and, at the time of completing the polling of them, an interruption acceptance signal X is transmitted and subsequently interruption signal reception time slots (or empty time slots) Y are given. A plurality of these time slots are given for reducing any collision of signals when two or more terminal units request interrupts at the same time. By random selection of these time slots, such reduction can be made. Upon finish of the interruption time slots, the polling of the following units is started. Thus, after completion of polling all the units, the state returns to the talk mode.

Fig. 6 shows an example of a timing chart of the system, wherein an interruption is made. As mentioned hereinbefore, usually the state stands in a talk mode. Referring also to Fig. 2, upon start of the polling, polling signals are transmitted from the central station 3 as shown by A to C. In response thereto, the necessary data are transmitted from the terminal units $1_1$ and $1_2$ as response signals a to c.

Now it is assumed that an interruption button is pushed in the terminal unit $1_2$. Then the state goes to the wait of an interruption acceptance signal from the central station 3. The central station 3 discontinues the polling after an appropriate time interval and transmits an interruption acceptance signal X and further continuously gives an appropriate number of interruption signal reception time slots Y. The terminal unit $1_2$, after receiving the interruption acceptance signal X, selects at random one of the interruption signal reception time slots Y and transmits an interruption signal x.

The central station 3, upon receipt of the interruption signal x in the time slots Y, transmits a polling completion signal z and returns to the talk mode. Then the terminal unit returns to the talk mode by this polling completion signal. In this connection, it is also possible to employ means for returning to the talk mode by the termination of the polling in the central station, and the timeout in the terminal unit without generating the polling completion signal. In the case wherein an urgent operation is required, however, this example is more suitable.

Fig. 7 shows an example of a signal format. In this Fig. 7, bit synchronization signal is a preamble for stabilizing the system. The frame synchronization signal indicates a head of the frame and means that the data will follow thereafter. The data portion is constituted by various informations. Its command portion discriminates polling signals, response signals, interruption acceptance signals, interruption signals, polling completion signals, etc. The individual numbers to follow are the identification numbers to be alloted to the terminal units and the central station. The data portion is constituted also by other various informations.

As described above, the present invention also provides a method of operating a communication system capable of interruption talk during data transmission by polling process between terminal units and a central station.

The central station has the functions of

(a) usually in a talk mode, talking with the terminal units,

(b) when manually or automatically changed to a polling mode, effecting data collection by polling against at least a part of the terminal units sequentially and continuously, and, when finished, returning to the talk mode by generating a polling completion signal or simply terminating the polling, and

(c) until the predetermined polling is finished, repeating steps of (i) generating interruption acceptance signals at appropriate intervals in the polling mode, (ii) giving thereafter a plurality of time slots for receiving the interruption signals from the terminal units, and (iii) when interruption signals from the terminal units are received in the plurality of time slots, returning to the talk mode by generating a polling finish signal and terminating the polling or simply terminating the polling, and when not received, continuing the polling.

The plural terminal units have the functions of

(a) usually in a talk mode, talking with the central station or other terminal units by simplex or duplex operation,

(b) changing to a polling mode upon receipt of a polling start signal or a polling signal from the central station, inhibiting the talking in the polling mode and, when the polling signal to themselves is received, sending their own messages,

(c) when occasion demands to do talk in the polling mode, either manually or automatically, assuming a plurality of slots timed with the central station independently after receiving the interruption acceptance signal from the central station, electing at random one of the slots and sending an interruption signal through such slots, and

(d) releasing the polling mode to the talk mode either when a polling finish signal is received or a polling signal is not received for a predetermined time interval;

Thus the talk and the data transmission by polling process are realized in the same channel.

As it is understood from the above explanation, the interruption talk system of the present invention enables interruption talk even during the polling. Namely, it enables to realize the data transmission by the polling process in the same channel as that of the talking.

## Claims

**1.** A communication system comprising a central station (3), and a plurality of terminal units ($1_1$ - $1_N$) linked thereto,

(a) said central station (3) comprising:

means (12) for generating a sequence of digital signals comprising a plurality of polling signals (A - D) and at least one interruption acceptance signal (X), said interruption acceptance signal (X) being inserted into said polling signals (A -D) at a time interval and being followed by a plurality of empty time slots (Y); and

means (13, 16, 17) for sending said digital signals to said terminal units;

(b) each of said terminal units ($1_1$ - $1_N$) comprising:

means (13, 16, 17) for receiving said digital signals;

means (12, 13, 16, 17) for sending to said central station (3) a response signal (a - d) corresponding to each of said polling signals; and

means (12, 13, 16, 17) responsive to a control signal for sending an interruption signal (x) after the reception of said interruption acceptance signal (X);
(c) said central station (3) further comprising means (12, 13, 16, 17) for sending to said terminal units ($1_1$ - $1_N$) a polling completion signal in response to the reception of said interruption signal (x) within said empty time slots (Y); and
(d) each of said terminal units ($1_1$ - $1_N$) further comprising means (12, 13, 16, 17) for receiving said polling completion signal (Z),

whereby the terminal unit ($1_1$ - $1_N$) sending said interruption signal (x) talks with said central station (3).

**2.** A method of operating a communication control system which is capable of interrupting talk during data transmission in response to a polling process between terminal units ($1_1$ - $1_N$) and a central station (3), wherein said central station (3) operates in the following steps:
(a) talking with the terminal units ($1_1$ - $1_N$) by simplex or duplex operation while said system is in a talk mode;
(b) changing said system to a polling mode, collecting data by sequentially and continuously polling against at least some of the terminal units ($1_1$ - $1_N$), and returning to the talk mode when said polling is finished responsive to a termination of the polling; and
(c) repeating until the predetermined polling is finished the steps of (i) generating interruption acceptance signals (X) at appropriate intervals in the polling mode, (ii) thereafter giving a plurality of interruption slots (Y) for receiving interruption signals (x) from the terminal units ($1_1$ - $1_N$), and (iii) responding to interruption signals (x) from the terminal units ($1_1$ - $1_N$) which are received in the plurality of interruption slots (Y), said central station (3) returning to the talk mode by generating a polling finish signal (Z) and terminating the polling or by simply terminating the polling;
whereby the talk and the data transmission by polling process are realized in the same channel.

**3.** A method of operating a communication control system which is capable of interrupting talk during data transmission in response to a polling process between terminal units ($1_1$ - $1_N$) and a central station (3), wherein said plurality of terminal units ($1_1$ - $1_N$) operates in the following steps:
(a) talking with the central station (3) or other terminal units ($1_1$ - $1_N$) by simplex or duplex operation when operating in a talk mode;
(b) changing to a polling mode in response to a receipt of a polling signal (A - D) from the central station (3), inhibiting talking while said system is in the polling mode, and responding from a terminal unit ($1_1$ - $1_N$) in response to its receiving its own polling signal;
(c) responding to a demand for talking while the system is in the polling mode by assuming a plurality of slots (Y) which are independently timed with the central station (3) after a receipt of an interruption acceptance signal (X) from the central station (3), selecting at random one of the slots (Y) and sending an interruption signal (x); and
(d) releasing the polling mode to the talk mode in response to the receipt of either a polling finish signal (Z) or a failure to receive a polling signal (A - D) within a predetermined time interval;
whereby the talk and the data transmission by polling process are realized in the same channel.

**4.** A method of operating a communication control system which is capable of interrupting talk during data transmission in response to a polling process between terminal units ($1_1$ - $1_N$) and a central station (3), wherein:
(1) said central station (3) operates in the following steps:
(a) talking with the terminal units ($1_1$ - $1_N$) by simplex or duplex operation while said system is in a talk mode;
(b) changing said system to a polling mode, collecting data by sequentially and continuously polling against at least some of the terminal units ($1_1$ - $1_N$), and returning to the talk mode when said polling is finished responsive to a termination of the polling; and
(c) repeating until the predetermined polling is finished the steps of (i) generating interruption acceptance signals (X) at appropriate intervals in the polling mode, (ii) thereafter giving a plurality of interruption slots (Y) for receiving interruption signals (x) from the terminal units ($1_1$ - $1_N$), and (iii) responding to interruption signals (x) from the terminal units ($1_1$ -

$1_N$) which are received in the plurality of interruption slots (Y), said central station (3) returning to the talk mode by generating a polling finish signal (Z) and terminating the polling or by simply terminating the polling; and

(2) said plurality of terminal units ($1_1$ - $1_N$) operates in the following steps:

(a) talking with the central station (3) or other terminal units ($1_1$ - $1_N$) by simplex or duplex operation when operating in a talk mode;

(b) changing to a polling mode in response to a receipt of a polling signal (A - D) from the central station (3), inhibiting talking while said system is in the polling mode, and responding from a terminal unit ($1_1$ - $1_N$) in response to its receiving its own polling signal;

(c) responding to a demand for talking while the system is in the polling mode by assuming a plurality of slots (Y) which are independently timed with the central station (3) after a receipt of an interruption acceptance signal (X) from the central station (3), selecting at random one of the slots (Y) and sending an interruption signal (x); and

(d) releasing the polling mode to the talk mode in response to the receipt of either a polling finish signal (Z) or a failure to receive a polling signal (A - D) within a predetermined time interval;

whereby the talk and the data transmission by polling process are realized in the same channel.

## Patentansprüche

**1.** Kommunikationssystem mit einer Zentralstation (3) und mehreren mit ihr verbundenen Endstellen ($I_1$ bis $I_N$), wobei

(a) die Zentralstation (3) aufweist:

eine Einrichtung (12) zur Erzeugung einer Folge von digitalen Signalen, die eine Vielzahl von Abrufsignalen (A - D) und mindestens ein Unterbrechungsannahmesignal (X) aufweisen, wobei das Unterbrechungsannahmesignal (X) in einem Zeitabstand in die Abfragesignale (A - D) eingeblendet wird, gefolgt von einer Vielzahl freier Zeitschlitze (Y), und

eine Einrichtung (13, 16, 17), zum Senden der Digitalsignale zu den Endstellen,

(b) jede der Endstellen ($I_1$ bis $I_N$) aufweisen:

eine Einrichtung (13, 16, 17) für den Empfang der Digitalsignale,

eine Einrichtung (12, 13, 16, 17) zum Senden eines Antwortsignals (a - d) entsprechend jedem der Abfragesignale an die Zentralstation (3), und

eine Einrichtung (12, 13, 16, 17) zur Reaktion auf ein Steuersignal, um ein Unterbrechungssignal (x) nach dem Empfang des Unterbrechungsannahmesignals (X) zu senden,

(c) die Zentralstation (3) ferner eine Einrichtung (12, 13, 16, 17) aufweist, um an die Endstellen ($I_1$ bis $I_N$) ein Abfragebeendigungssignal in Reaktion auf den Empfang des Unterbrechungssignals (x) innerhalb der freien Zeitschlitze (Y) zu senden, und

(d) jede der Endstellen ($I_1$ bis $I_N$) ferner eine Einrichtung (12, 13, 16, 17) aufweist, um das Abfragebeendigungssignal (Z) zu empfangen,

wodurch die Endstelle ($I_1$ bis $I_N$), die dieses Unterbrechungssignal (x) sendet, mit der Zentralstation (3) spricht.

**2.** Verfahren zum Betrieb eines Kommunikationssteuersystems, mit dem ein Zwischensprechen während der Datenübertragung in Reaktion auf einen Abfrageprozeß zwischen Endstellen ($I_1$ bis $I_N$) und einer Zentralstation (3) möglich ist, und worin die Zentralstation (3) mit den folgenden Schritten betrieben wird:

(a) Sprechen der Endstellen ($I_1$ bis $I_N$) im Simplex- oder Duplexbetrieb, während sich das System in einem Sprachmodus befindet,

(b) Umschalten des Systems in einen Abfragemodus, Datensammeln durch sequentielles und kontinuierliches Abfragen gegen mindestens einige der Endstellen ($I_1$ bis $I_N$) und Rückkehr in den Sprachmodus, wenn in Reaktion auf eine Beendigung des Abfragens das Abfragen abgeschlossen ist, und

(c) bis zum Abschluß des vorbestimmten Abfragens Wiederholung der Schritte (i) zur Erzeugung der Unterbrechungsannahmesignale (X) in geeigneten Abständen im Abrufmodus, (ii) danach Abgabe einer Vielzahl von Unterbrechungszeitschlitzen (Y), um die Unterbrechungssignale (x) von den Endstellen ($I_1$ bis $I_N$) zu empfangen, und (iii) Ansprechen auf die Unterbrechungssignale (x) von den Endstellen ($I_1$ bis $I_N$), die in einer Vielzahl von Unterbrechungszeitschlitzen (Y) empfangen wurden, Rückkehr der Zentralstation (3) in den Sprachmodus durch Erzeugung eines Abfragebeendigungssignals (Z) und Beendigung des Abfragens oder durch einfache Beendigung des Abfragens;

wodurch die Übertragung von Sprache und Daten durch den Abfrageprozeß in dem gleichen Kanal realisiert wird.

**3.** Verfahren zum Betrieb eines Kommunikationssteuerungssystems, mit dem ein Zwischensprechen während der Datenübertragung in Reaktion auf einen Abfrageprozeß zwischen Endstellen ($I_1$ bis $I_N$) und einer Zentralstation (3) möglich ist, worin die Vielzahl der Endstellen ($I_1$ bis $I_N$) mit den folgenden Schritten betrieben werden:

(a) Sprechen mit der Zentralstation (3) oder anderen Endstellen ($I_1$ bis $I_N$) im Simplex- oder Duplexbetrieb bei Betrieb in einem Sprachmodus;

(b) Umschalten in einen Abfragemodus in Reaktion auf den Empfang eines Abfragesignals (A - D) von der Zentralstation (3), Verhindern des Sprechens, während sich das System im Abfragemodus befindet, und Ansprechen von einer Endstelle ($I_1$ bis $I_N$) in Reaktion auf deren Empfang ihres eigenen Abfragesignals,

(c) Antworten auf eine Sprechanforderung, während sich das System im Abfragemodus befindet, unter Annahme einer Vielzahl von Zeitschlitzen (Y), die unabhängig mit der Zentralstation (3) taktgesteuert sind, nach einem Empfang eines Unterbrechungsannahmesignals (X) von der Zentralstation (3), Auswählen einer der Zeitschlitze (Y) auf zufälliger Basis und Senden eines Unterbrechungssignals (x);

(d) Freigabe des Abrufmodus zum Sprachmodus in Reaktion auf den Empfang entweder eines Abfragebeendigungssignals (Z) oder eines Ausbleibens eines zu empfangenden Abfragesignals (A - D) innerhalb einer vorbestimmten Zeitdauer;

wodurch die Übertragung von Sprache und Daten durch den Abfrageprozeß in dem gleichen Kanal realisiert wird.

**4.** Verfahren zum Betrieb eines Kommunikationssteuerungssystems, mit dem ein Zwischensprechen während der Datenübertragung in Reaktion auf einen Abrufprozeß zwischen den Endstellen ($I_1$ bis $I_N$) und einer Zentralstation (3) möglich ist, worin:

(1) die Zentralstation mit den folgenden Schritten betrieben wird:

(a) Sprechen der Endstellen ($I_1$ bis $I_N$) im Simplex- oder Duplexbetrieb, während sich das System in einem Sprachmodus befindet,

(b) Umschalten des Systems in einen Abfragemodus, Datensammeln durch sequentielles und kontinuierliches Abfragen gegen mindestens einige der Endstellen ($I_1$ bis $I_N$) und Rückkehr in den Sprachmodus, wenn in Reaktion auf eine Beendigung des Abfragens das Abfragen abgeschlossen ist, und

(c) bis zum Abschluß des vorbestimmten Abfragens Wiederholung der Schritte (i) zur Erzeugung der Unterbrechungsannahmesignale (X) in geeigneten Abständen im Abrufmodus, (ii) danach Abgabe einer Vielzahl von Unterbrechungszeitschlitzen (Y), um die Unterbrechungssignale (x) von den Endstellen ($I_1$ bis $I_N$) zu empfangen, und (iii) Ansprechen auf die Unterbrechungssignale (x) von den Endstellen ($I_1$ bis $I_N$), die in einer Vielzahl von Unterbrechungszeitschlitzen (Y) empfangen wurden, Rückkehr der Zentralstation (3) in den Sprachmodus durch Erzeugung eines Abfragebeendigungssignals (Z) und Beendigung des Abfragens oder durch einfache Beendigung des Abfragens, und

(2) die Vielzahl der Endstellen ($I_1$ bis $I_N$) mit den folgenden Schritten betrieben wird:

(a) Sprechen mit der Zentralstation (3) oder anderen Endstellen ($I_1$ bis $I_N$) im Simplex- oder Duplexbetrieb bei Betrieb in einem Sprachmodus;

(b) Umschalten in einen Abfragemodus in Reaktion auf den Empfang eines Abfragesignals (A - D) von der Zentralstation (3), Verhindern des Sprechens, während sich das System im Abfragemodus befindet, und Ansprechen von einer Endstelle ($I_1$ bis $I_N$) in Reaktion auf deren Empfang ihres eigenen Abfragesignals;

(c) Antworten auf eine Sprechanforderung, während sich das System im Abfragemodus befindet, unter Annahme einer Vielzahl von Zeitschlitzen (Y), die unabhängig mit der Zentralstation (3) taktgesteuert sind, nach einem Empfang eines Unterbrechungsannahmesignals (X) von der Zentralstation (3), Auswählen einer der Zeitschlitze (Y) auf zufälliger Basis und Senden eines Unterbrechungssignals (x);

(d) Freigabe des Abrufmodus zum Sprachmodus in Reaktion auf den Empfang entweder eines Abfragebeendigungssignals (Z) oder eines Ausbleibens eines zu empfangenden Abfragesignals (A - D) innerhalb einer vorbestimmten Zeitdauer;

wodurch die Übertragung von Sprache und Daten durch den Abfrageprozeß in dem gleichen Kanal realisiert wird.

**Revendications**

**1.** Système de communication comprenant une station centrale (3) et une multitude d'unités terminales ($I_1$ à $I_N$) reliées à celle-ci,

(a) la station centrale (3) comprenant :

un moyen (12) pour produire une séquence de signaux numériques comprenant une multitude de signaux d'interrogation (A à D) et au moins un signal d'acceptation d'interruption (X), le signal d'acceptation d'interruption (X) étant inséré dans les signaux d'interrogation (A à D) à un intervalle de temps et étant suivi par une multitude de tranches de temps vides (Y), et

un moyen (13, 16, 17) pour envoyer les signaux numériques aux unités terminales ;

(b) chacune des unités terminales ($I_1$ à $I_N$) comprenant :

un moyen (13, 16, 17) pour recevoir les signaux numériques ;

un moyen (12, 13, 16, 17) pour envoyer à la station centrale (3) un signal de réponse (a à d) correspondant à chacun des signaux d'interrogation, et

un moyen (12, 13, 16, 17) sensible à un signal de commande pour envoyer un signal d'interruption (x) après la réception du signal d'acceptation d'interruption (X) ;

(c) la station centrale (3) comprenant de plus un moyen (12, 13, 16, 17) pour envoyer aux unités terminales ($I_1$ à $I_N$) un signal d'achèvement d'interrogation en réponse à la réception du signal d'interruption (x) à l'intérieur des tranches de temps vides (Y), et

(d) chacune des unités terminales ($I_1$ à $I_N$) comprenant de plus un moyen (12, 13, 16, 17) pour recevoir le signal d'achèvement d'interrogation (Z), si bien que l'unité terminale ($I_1$ à $I_N$) envoyant le signal d'interruption (x) converse avec la station centrale (3).

**2.** Procédé pour faire fonctionner un système de commande de communication qui peut interrompre la conversation pendant la transmission de données en réponse à un processus d'interrogation entre les unités terminales ($I_1$ à $I_N$) et une station centrale (3), dans lequel la station centrale (3) fonctionne selon les étapes suivantes consistant à :

(a) converser avec les unités terminales ($I_1$ à $I_N$) par un fonctionnement bidirectionnel ou bidirectionnel à alternat tandis que le système est en mode conversation ;

(b) basculer le système en mode interrogation, collecter les données en interrogeant séquentiellement et continuellement au moins certaines des unités terminales ($I_1$ à $I_N$) et revenir au mode conversation lorsque l'interrogation est finie répondant à une fin de l'interrogation, et

(c) répéter jusqu'à ce que l'interrogation prédéterminée soit finie les étapes de (i) produire des signaux d'acceptation d'interruption (X) à des intervalles appropriés dans le mode interrogation, (ii) prévoir par la suite une multitude de tranches d'interruption (Y) pour recevoir les signaux d'interruption (x) provenant des unités terminales ($I_1$ à $I_N$) et (iii) répondre aux signaux d'interruption (x) provenant des unités terminales ($I_1$ à $I_N$) qui sont reçus dans la multitude de tranches d'interruption (Y), la station centrale (3) revenant au mode conversation en produisant un signal de fin d'interrogation (Z) et terminant l'interrogation ou en terminant simplement l'interrogation ;

si bien que la transmission de la parole et des données par un processus d'interrogation sont obtenues sur la même voie.

**3.** Procédé pour faire fonctionner un système de commande de communication qui peut interrompre la conversation pendant la transmission de données en réponse à un processus d'interrogation entre des unités terminales ($I_1$ à $I_N$) et une station centrale (3), dans lequel la multitude d'unités terminales ($I_1$ à $I_N$) fonctionne selon les étapes suivantes consistant à :

(a) converser avec la station centrale (3) ou autres unités terminales ($I_1$ à $I_N$) par un fonctionnement bidirectionnel ou bidirectionnel à alternat lorsqu'on fonctionne en mode conversation ;

(b) basculer en mode interrogation en réponse à une réception d'un signal d'interrogation (A à D) provenant de la station centrale (3), interdire la conversation tandis que le système est dans le mode interrogation et répondre à partir d'une unité terminale ($I_1$ à $I_N$) en réponse à sa réception de son propre signal d'interrogation ;

(c) répondre à une demande pour conversation tandis que le système est dans le mode interrogation en prévoyant une multitude de tranches (Y) qui sont indépendamment synchronisées avec la station centrale (3) après une réception d'un signal d'acceptation d'interruption (X) provenant de la station centrale (3), sélectionner une tranche aléatoire parmi les tranches (Y) et envoyer un signal d'interruption (x), et

(d) passer du mode d'interrogation au mode conversation en réponse à la réception de, soit un signal de fin d'interrogation (Z), soit une impossibilité de recevoir un signal d'interrogation (A à D) pendant un intervalle de temps prédéterminé ;

si bien que la transmission de la parole et des données par un processus d'interrogation sont obtenues sur la même voie.

**4.** Procédé pour faire fonctionner un système de commande de communication qui peut interrompre la conversation pendant la transmission de données en réponse à un processus d'interrogation entre les unités terminales ($I_1$ à $I_N$) et une station centrale (3), dans lequel :

(1) la station centrale (3) fonctionne selon les étapes suivantes consistant à :

(a) converser avec les unités terminales ($I_1$ à $I_N$) par un fonctionnement bidirectionnel ou bidirectionnel à alternat tandis que le système est en mode conversation ;

(b) basculer le système en mode interrogation, collecter les données en interrogeant séquentiellement et continuellement au moins certaines des unités terminales ($I_1$ à $I_N$) et revenir au mode conversation lorsque l'interrogation est finie, sensible à une fin d'interrogation, et

(c) répéter jusqu'à ce que l'interrogation prédéterminée soit finie les étapes de (i) produire des signaux d'acceptation d'interruption (X) à des intervalles appropriés dans le mode interrogation, (ii) prévoir par la suite une multitude de tranches d'interruption (Y) pour recevoir les signaux d'interruption (x) provenant des unités terminales ($I_1$ à $I_N$) et (iii) répondre aux signaux d'interruption (x) provenant des unités terminales ($I_1$ à $I_N$) qui sont reçues dans la multitude de tranches d'interruption (Y), la station centrale (3) revenant au mode conversation en produisant un signal de fin d'interrogation (Z) et terminant l'interrogation ou en terminant simplement l'interrogation ; et

(2) la multitude des unités terminales ($I_1$ à $I_N$) fonctionnent selon les étapes suivantes consistant à :

(a) converser avec la station centrale (3) ou les autres unités terminales ($I_1$ à $I_N$) par un fonctionnement bidirectionnel ou bidirectionnel à alternat lorsque l'on fonctionne en mode conversation ;

(b) basculer en mode interrogation en réponse à une réception d'un signal d'interrogation (A à D) provenant de la station centrale (3), interdire la conversation tandis que le système est dans le mode interrogation et répondre à partir d'une unité terminale ($I_1$ à $I_N$) en réponse à sa réception de son propre signal d'interrogation ;

(c) répondre à une demande pour converser tandis que le système est dans le mode interrogation en prévoyant une multitude de tranches (Y) qui sont indépendamment synchronisées avec la station centrale (3) après une réception d'un signal d'acceptation d'interruption (X) provenant de la station centrale (3), sélectionner une tranche aléatoire parmi les tranches (Y) et envoyer un signal d'interruption (x), et

(d) passer du mode interrogation au mode conversation en réponse à la réception, soit d'un signal de fin d'interrogation (Z) soit de l'impossibilité de recevoir un signal d'interrogation (A à D) à l'intérieur d'un intervalle de temps prédéterminé ;

si bien que la transmission de la parole et des données par le processus d'interrogation sont obtenues sur la même voie.

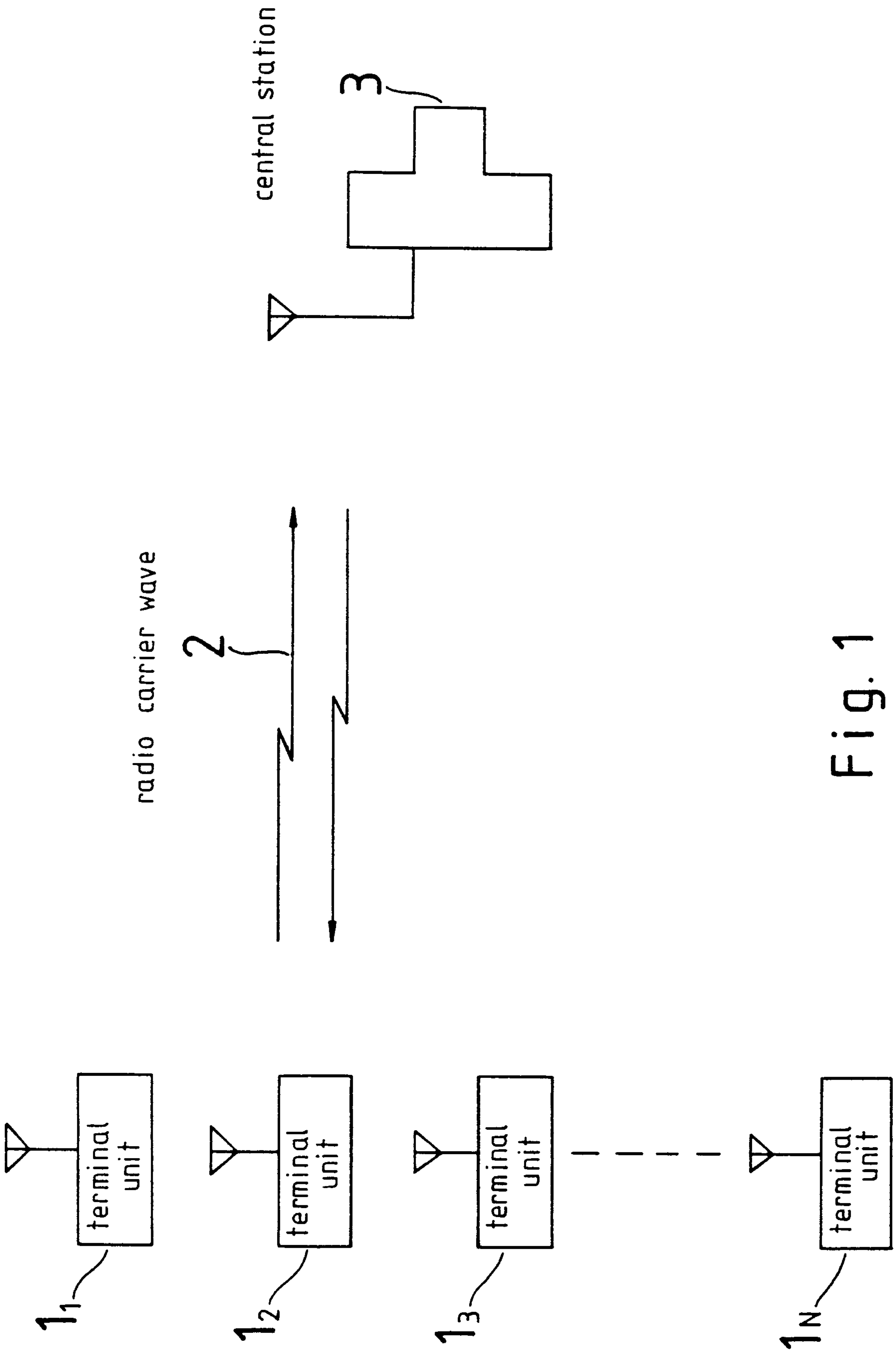
central station
3
radio carrier wave
2
terminal unit
1₁
terminal unit
1₂
terminal unit
1₃
terminal unit
1N

Fig. 1

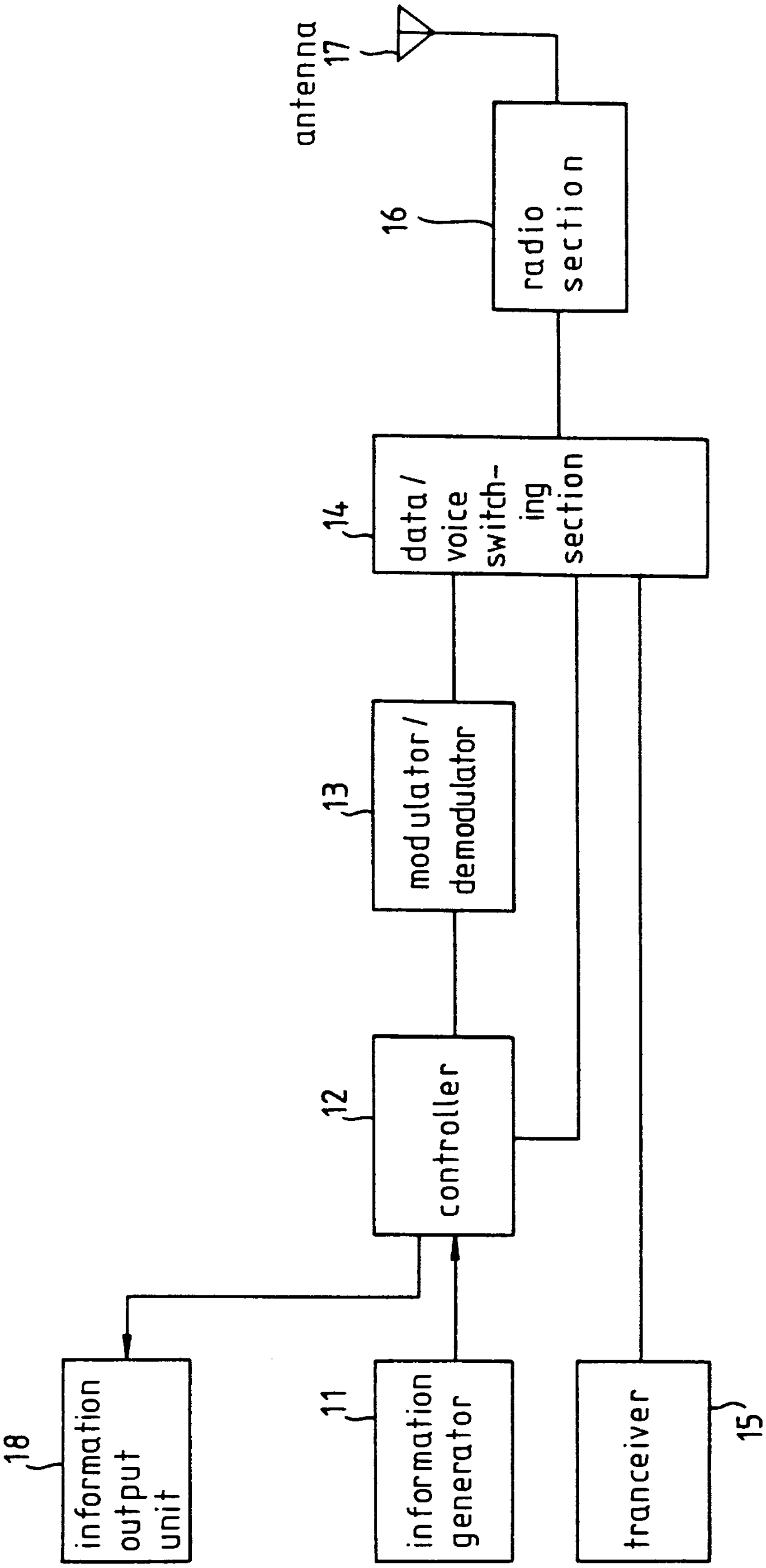
antenna
17
16
radio section
14
data / voice switch- ing section
13
modulator / demodulator
12
controller
18
information output unit
11
information generator
tranceiver
15

Fig. 2

Fig. 3

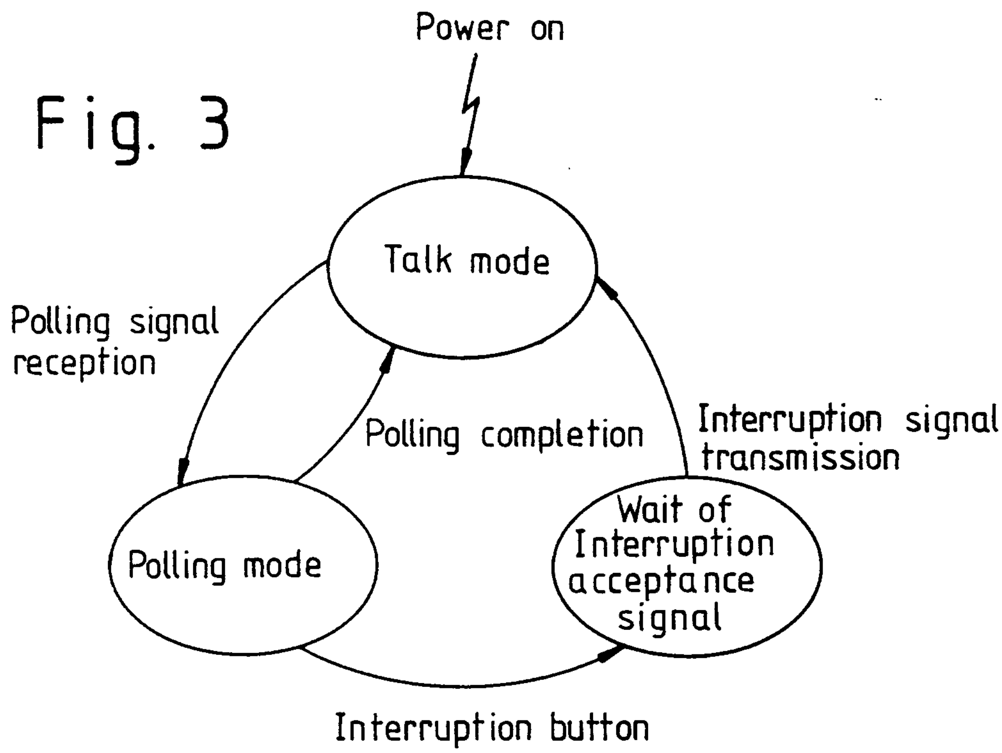
Power on
Talk mode
Polling signal reception
Polling completion
Interruption signal transmission
Polling mode
Wait of Interruption acceptance signal
Interruption button

Fig. 4

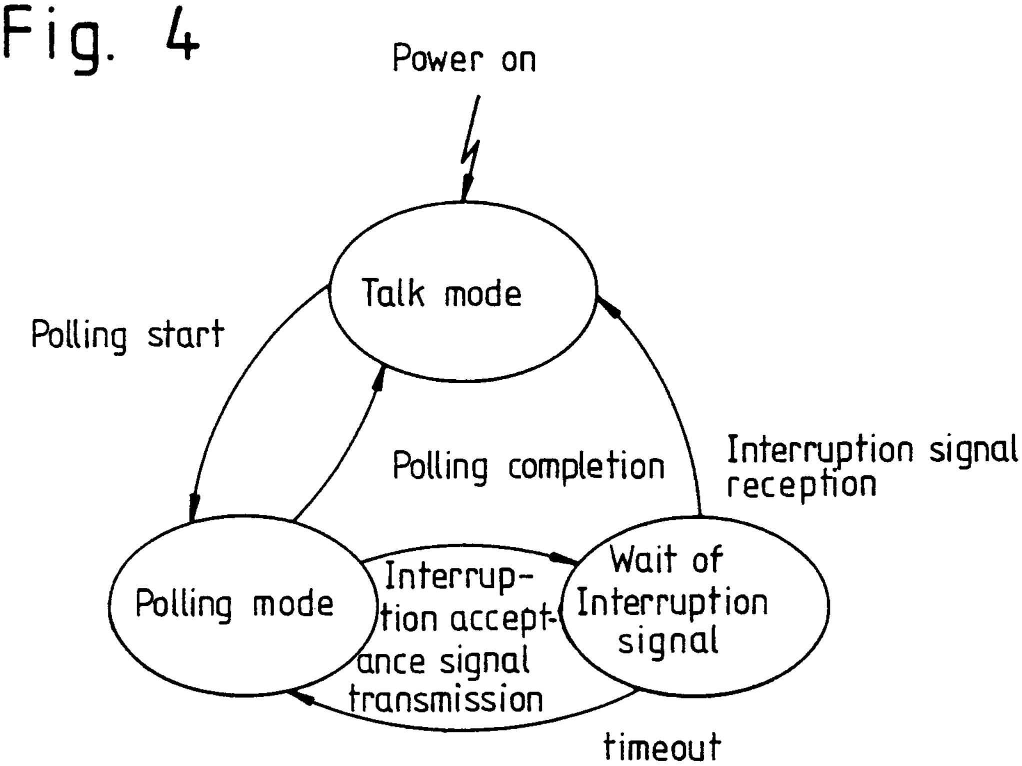
Power on
Talk mode
Polling start
Polling completion
Interruption signal reception
Polling mode
Interruption acceptance signal transmission
Wait of Interruption signal
timeout

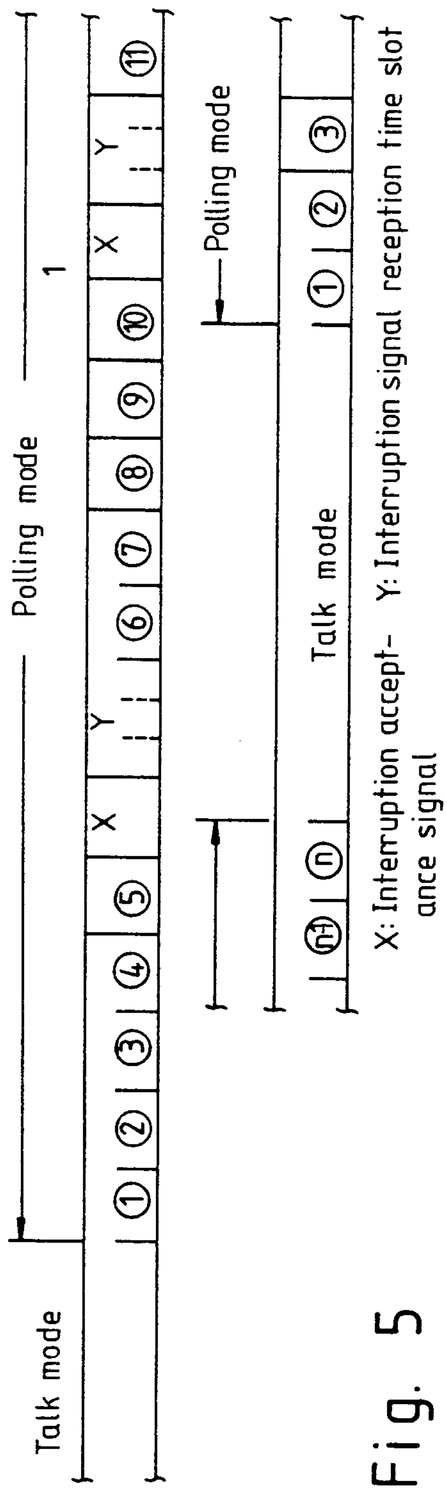
Talk mode
Polling mode
1
① ② ③ ④ ⑤ X Y ⑥ ⑦ ⑧ ⑨ ⑩ X Y ⑪
Polling mode
n-1 n Talk mode ① ② ③
X: Interruption acceptance signal
Y: Interruption signal reception time slot

Fig. 5

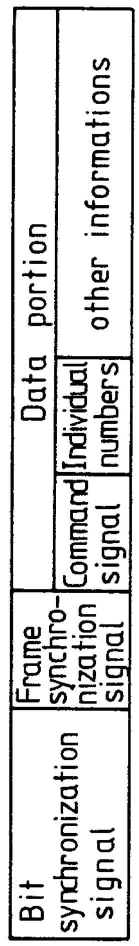
Bit synchronization signal
Frame synchronization signal
Data portion
Command signal
Individual numbers
other informations

Fig. 7

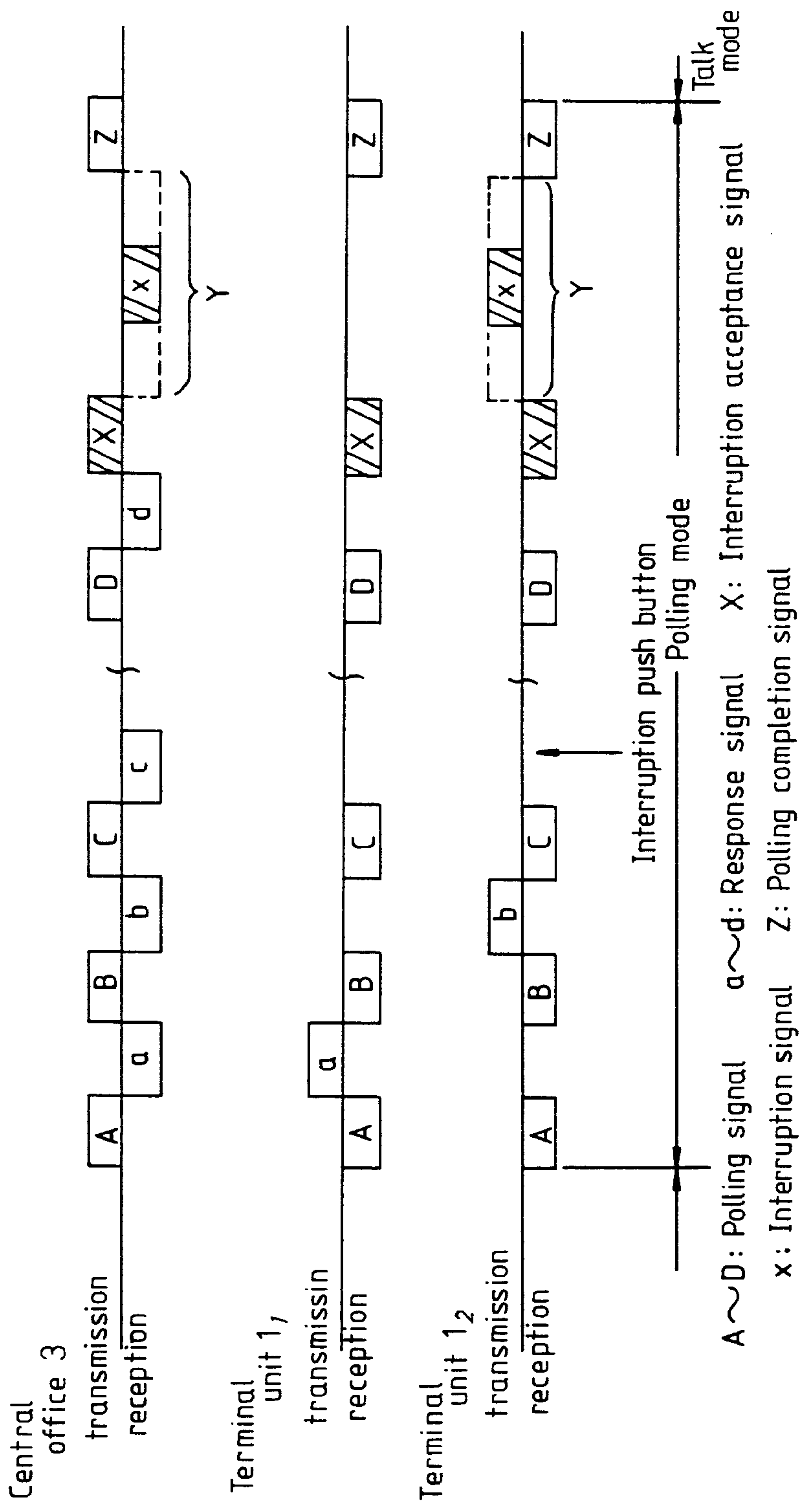
Central office 3
transmission
reception
Terminal unit 1₁
transmissin
reception
Terminal unit 1₂
transmission
reception
A
a
B
b
C
c
D
d
X
x
Y
Z
Interruption push button
Polling mode
Talk mode
A～D: Polling signal
a～d: Response signal
X: Interruption acceptance signal
x: Interruption signal
Z: Polling completion signal

Fig. 6